# EUROPEAN PATENT SPECIFICATION

(11) **EP 2 167 812 B1**
(45) Date of publication and mention of the grant of the patent: **23.11.2016**
(21) Application number: 08775948.6
(22) Date of filing: 16.07.2008
(51) Int. Cl.: F03D 3/00, F03D 3/02, F03D 3/06

(54) **VERTICAL AXIS TURBINE**
TURBINE MIT VERTIKALER ACHSE
TURBINE À AXE VERTICAL

(30) Priority: 17.07.2007 GB 0713931
(43) Date of publication of application: 31.03.2010
(73) Proprietor: Vince, Dale, Stroud, Gloucestershire GL5 3AP (GB)
(72) Inventor: Vince, Dale, Stroud, Gloucestershire GL5 3AP (GB)
(74) Representative: Howson, Richard G.B.
(86) International application number: PCT/GB2008/002410
(87) International publication number: WO 2009/010736

(56) References cited:
- EP-A- 1 498 604
- WO-A-2007/017629
- CA-A1- 1 134 277
- US-A1- 2003 209 911
- US-A1- 2006 006 658
- US-A1- 2006 163 963
- US-A1- 2007 029 801

## Description

This invention relates to a vertical axis turbine and in particular, but not exclusively to a wind turbine for use in urban domestic locations and other built up areas or a turbine for use in tidal flow.

As a result of significant concerns about global warming, there is a need for small efficient wind turbines for domestic use. Currently those available have horizontal axis configurations. This is undesirable, because they spend a lot of time 'hunting' the winds that change direction constantly in urban or built up areas; they produce significant horizontal and gyroscopic forces on their mountings as a result of this 'hunting' and significant vibrations. Through all of this, and blade noise, they tend to be quite noisy. While a horizontal axis machine is 'hunting' the wind in this way, it is not producing electricity efficiently. Very similar conditions can pertain in tidal flow.

Large scale vertical axis wind turbines are known but current designs are not readily scalable so that they can be roof or chimney mounted.

US2006/0006658 discloses a wind energy conversion system including upper and lower wind turbines having counter-rotating blade assemblies supported for rotation about a vertical rotation axis, with each blade assembly carrying a rotor for rotation about a vertical rotation past a stator to produce an electrical output.

From one aspect the invention consists in a vertical axis turbine having first and second rotors mounted about the axis for contra-rotation and a generator located between the rotors for generating electricity in response to rotation of the rotors characterised in that the one rotor is a substantial mirror image of the other.

Each rotor may include a central hub and a plurality of outwardly extending cantilevered arms; each arm having an aerofoil blade extending generally parallel to the axis.

The generator is preferably an axial flux generator and each rotor may carry at least part of the generator.

For example one rotor may carry an array of magnets, whilst the other may carry an array of coils. Alternatively, each rotor may carry an array of magnets or coils and they may rotate adjacent an intervening which carries the other of magnets or coils.

From a further aspect the invention consists in a vertical axis turbine having at least one rotor including a central hub, a plurality of outwardly extending arms each arm having an aerofoil blade extending generally parallel to the axis.

Preferably the arms are cantilevered.

The invention may still further include a vertical axis turbine having a pair of contra-rotating rotors and an axial flux generator located between the rotors.

In that case each rotor may carry at least a part of the generator.

Although the invention has been defined above it is to be understood it includes any inventive combination of the features set out above or in the following description.

The invention can be performed in various ways and a specific embodiment will now be described, by way of example, with reference to the accompanying drawings in which:

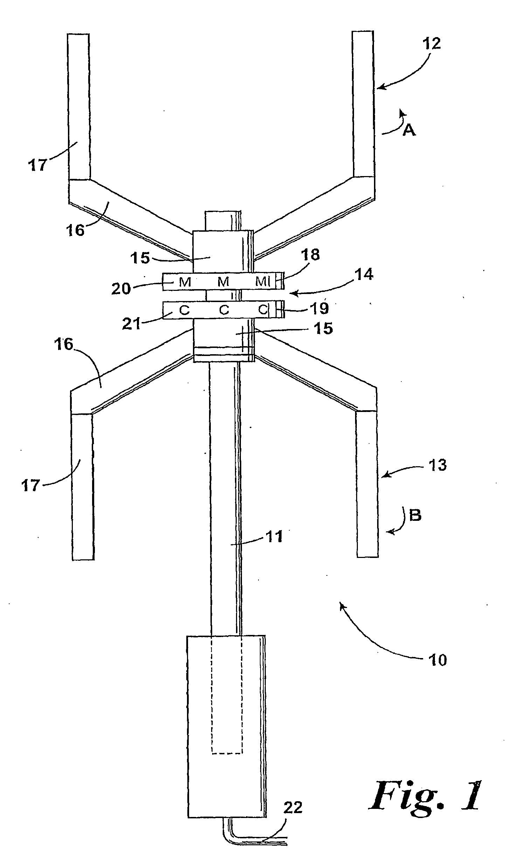

Figure 1 is a schematic view of an embodiment of the invention;
Figure 2 is a side view of a practical construction;
Figure 3 is a view from below of a third embodiment of turbine of Figure 2.
Figure 4 is a side view of a further embodiment; and
Figure 5 is an enlarged scrap view of a part of the turbine.

A wind turbine, generally indicated at 10 has a vertically extending shaft 11 which carries rotors 12,13 for contra-rotation thereon. Rotor 13 is preferably constructed exactly in the same way as rotor 12, but is inverted relative to rotor 12, so it essentially constitutes the mirror image of rotor 12.

A generator, generally indicated at 14 is located between the rotors.

Each rotor 12, 13, comprises a central hub 15, a number of spaced cantilevered arms 16 (typically 3) and an upstanding aerofoil section blade 17 attached to each arm to extend generally parallel to the axis of shaft 11. As 13 is inverted with respect to 12 and the blades are orientated to the wind such that, wind travelling in any direction will rotate the rotors 12, 13, in opposite directions about the shaft 11 as indicated by arrows A and B. The generator 14 conveniently comprises a first plate 18 mounted on rotor 12 and a second plate 19 mounted on rotor 11. In this example, plate 18 carries magnets 20, whilst plate 19 carries coils 21. Electricity generated by the magnetic flux lines by the coils, due to the relative rotation can be fed out through a cable 22, which is connected to the interconnected coils 21 by a slip-ring (not showri).

The design has a number of advantages:
1. Contra-rotation doubles the effective speed of the generator, and hence increases its output, for the same wind speed. Wind speeds are very low in urban and built up areas and the challenge for small generators (operating in such areas) is to have sufficient speed (revolutions) in the generator, to make power, but from a very low wind speed most of the time. Contra rotation effectively doubles the available wind speed, as seen by the generator.
2. As the rotors 12, 13 are essentially symmetrical, any vibration of forces will tend to cancel out. Minimising noise as well as mechanical loads.
3. There is no gyroscopic load.
4. The blade 17 of the two rotors are effectively the equivalent of a single rotor of double the individual blade length, but without the leverage loads that would result from the longer blade. This enables the blades to be free of the supporting structures seen on most vertical axis machines, reducing weight, and therefore mechanical loads, and also improving airflow over the blades (being in free wind) and hence efficiency.
5. Unlike most vertical axis turbines, the shaft 11 can stop just above the lowermost hub 15 and does not need to extend the full length of the rotors. Further no external supporting structure is required.
6. The positioning of the generator enables a compact design which does not use any mechanical coupling and thus avoids the losses that would result.
7. The design is cheap to manufacture as only a single rotor needs to be tooled for.

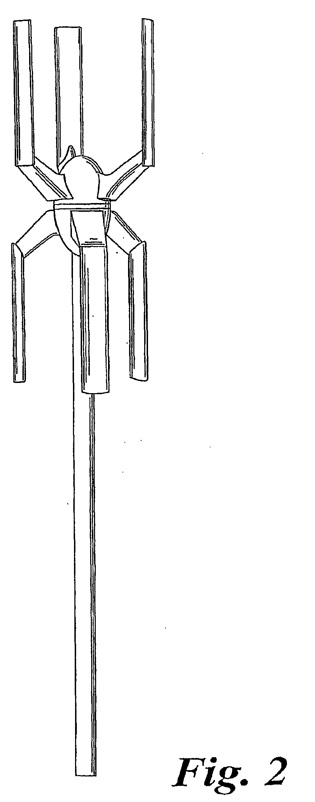

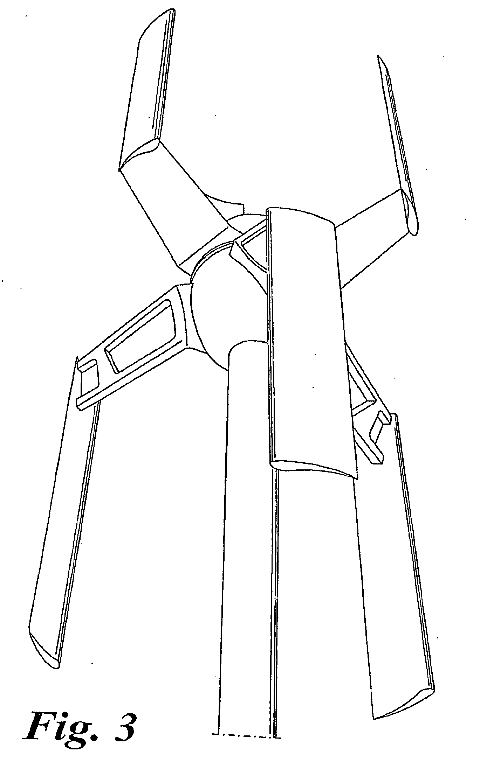

Figure 2 illustrates a practical design of a turbine 10 in which the hubs 15 and cantilever arms 16 have been shaped to reduce air resistance. In Figure 3 cut outs 22 are provided in the arms 16 to reduce weight. Preferably the arms, blades and hubs of any of these designs are made from carbon fibre materials and can be moulded. In some instances each arm and blade pair may be formed integral. The aerofoil section of the blades 16 can be seen in Figure 3.

Although to this point described in terms of wind, the design is also suitable for use in tidal flow. In either case the mid point mounting enables an effectively large blade tubine to be formed without being subjected to over large forces. Each vertically aligned pair of blades is the equivalent to one blade of twice the weight. However by splitting the design at the midpoint the issue of weight, strength and loading that occur with large blades are avoided. It is therefore possible to build quite substantial turbines. As a rough rule of thumb, 2 metres of blade is needed to generate 1 kilowatt of power. Thus the present turbine could generate 1 kilowatt with a set of 1 metre blades, rather than having to use 2 metre blades.

The contra-rotating nature of the design also means that torque levels tend to cancel out reducing vibration and some noise cancellation may occur due to the oppositely sensed generation of the noise.

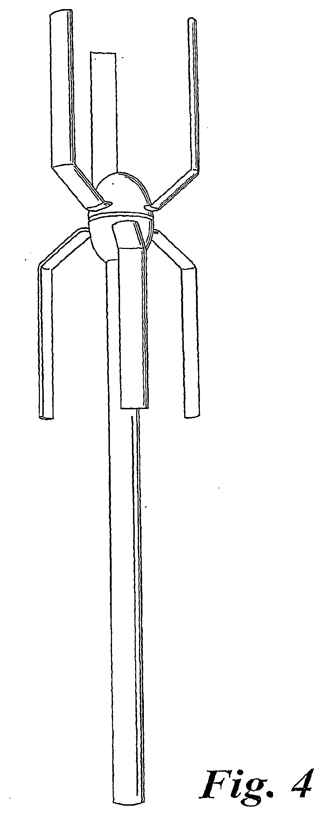

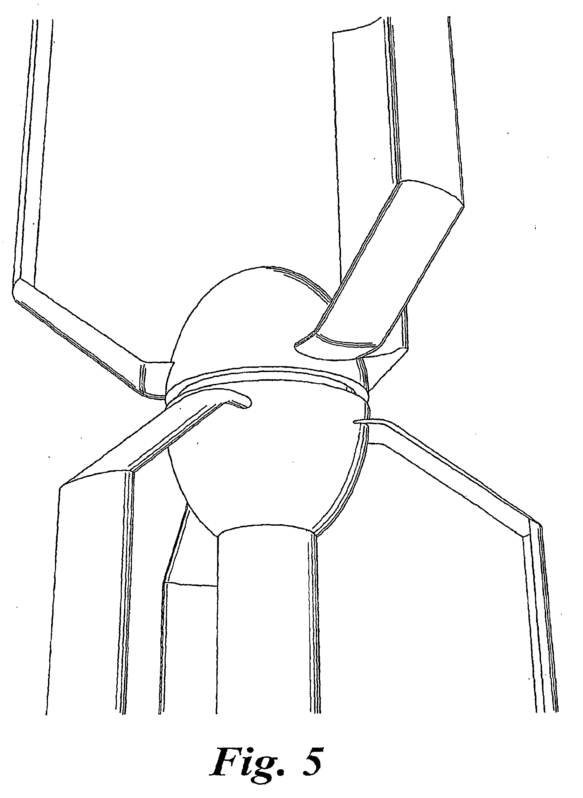

In Figures 4 and 5 each arm 16 is formed integrally with its respective blade 17. This can enhance strength and can reduce air resistance and drag.

## Claims

1. A vertical axis turbine (10) having first (12) and second (13) rotors mounted about the axis (11) for contra rotation and a generator (14) located between the rotors for generating electricity in response to rotation of the rotors **characterised in that** each of the rotors is substantially the same as the other rotor but inverted.

2. A turbine (10) as claimed in claim 1 wherein each rotor (12, 13) includes a central hub (15), a plurality of outwardly extending cantilevered arms (16); each arm having an aerofoil blade (17) extending substantially parallel to the axis (11).

3. A turbine (10) as claimed in claim 1 or claim 2 wherein the generator (14) is an axial flux generator.

4. A turbine (10) as claimed in any one of the preceding claims wherein each rotor (12, 13) carries at least a part of the generator (14).

5. A turbine (10) as claimed in any one of the preceding claims for use in wind or tidal flow.

## Patentansprüche

1. Turbine (10) mit vertikaler Achse, die einen ersten (12) und einen zweiten (13) Rotor hat, die zur gegenläufigen Drehung um die Achse (11) angebracht sind, und einen Generator (14), der zwischen den Rotoren angeordnet ist, zum Erzeugen von Elektrizität als Reaktion auf die Drehung der Rotoren, **dadurch gekennzeichnet, dass** jeder der Rotoren im Wesentlichen der gleiche wie der andere Rotor, jedoch invertiert, ist.

2. Turbine (10) nach Anspruch 1, wobei jeder Rotor (12, 13) eine zentrale Nabe (15) aufweist, wobei sich eine Mehrzahl von frei auskragenden Armen (16) nach außen erstreckt, wobei jeder Arm eine Profilschaufel (17) hat, die sich im Wesentlichen parallel zur Achse (11) erstreckt.

3. Turbine (10) nach Anspruch 1 oder Anspruch 2, wobei der Generator (14) ein Axialflussgenerator ist.

4. Turbine (10) nach einem der vorhergehenden Ansprüche, wobei jeder Rotor (12, 13) zumindest einen Teil des Generators (14) trägt.

5. Turbine (10) nach einem der vorhergehenden Ansprüche zur Verwendung in Wind oder Gezeitenströmung.

## Revendications

1. Turbine à axe vertical (10) ayant des premier (12) et second (13) rotors montés autour de l'axe (11) pour une rotation en sens contraire et un générateur (14) situé entre les rotors pour produire de l'électricité en réponse à la rotation des rotors, **caractérisée en ce que** chacun des rotors est sensiblement le même que l'autre rotor, mais inversé.

2. Turbine (10) selon la revendication 1, dans laquelle chaque rotor (12, 13) inclut un moyeu central (15), une pluralité de bras en porte-à-faux s'étendant vers l'extérieur (16) ; chaque bras ayant une aube profilée (17) s'étendant sensiblement parallèlement à l'axe (11).

3. Turbine (10) selon la revendication 1 ou la revendication 2, dans laquelle le générateur (14) est un générateur à flux axial.

4. Turbine (10) selon l'une quelconque des revendications précédentes dans laquelle chaque rotor (12, 13) porte au moins une partie du générateur (14).

5. Turbine (10) selon l'une quelconque des revendications précédentes, à utiliser au vent ou dans le flux de la marée.
